Europäisches Patentamt

European Patent Office

Office européen des brevets

(19)

(11) **EP 0 613 235 B1**

(12) **FASCICULE DE BREVET EUROPEEN**

(45) Date de publication et mention
de la délivrance du brevet:
**19.05.1999 Bulletin 1999/20**

(51) Int Cl.⁶: **H02P 7/00**, H02M 7/5387

(21) Numéro de dépôt: **94400243.5**

(22) Date de dépôt: **04.02.1994**

(54) **Procédé de pilotage d'un appareil électrique réversible**

Steuerungsverfahren eines umkehrbaren elektrischen Apparats

Driving method of a reversible electric apparatus

(84) Etats contractants désignés:
**BE CH DE ES GB IE IT LI NL SE**

(30) Priorité: **23.02.1993 FR 9302050**

(43) Date de publication de la demande:
**31.08.1994 Bulletin 1994/35**

(73) Titulaire: **AEROSPATIALE Société Nationale Industrielle**
**75781 Paris Cédex 16 (FR)**

(72) Inventeur: **Dargent, Thierry**
**F-91620 Nozay (FR)**

(74) Mandataire: **Rinuy, Santarelli**
**14, avenue de la Grande Armée**
**75017 Paris (FR)**

(56) Documents cités:
**EP-A- 0 259 005**          **US-A- 4 514 666**

- **ELEKTRONIK, vol.39, no.17, 17 Août 1990, MUNCHEN DE pages 98 - 102 G.MAIOCCHI ET AL. 'Schutz von Motor-Treiber-Bausteinen'**

## Description

L'invention se rapporte au pilotage d'un moteur électrique ou de tout autre appareil électrique (transformateur ...) réversible (pouvant être moteur et/ou générateur) asservi par boucle de courant à l'aide d'un amplificateur à découpage du type "pont en H".

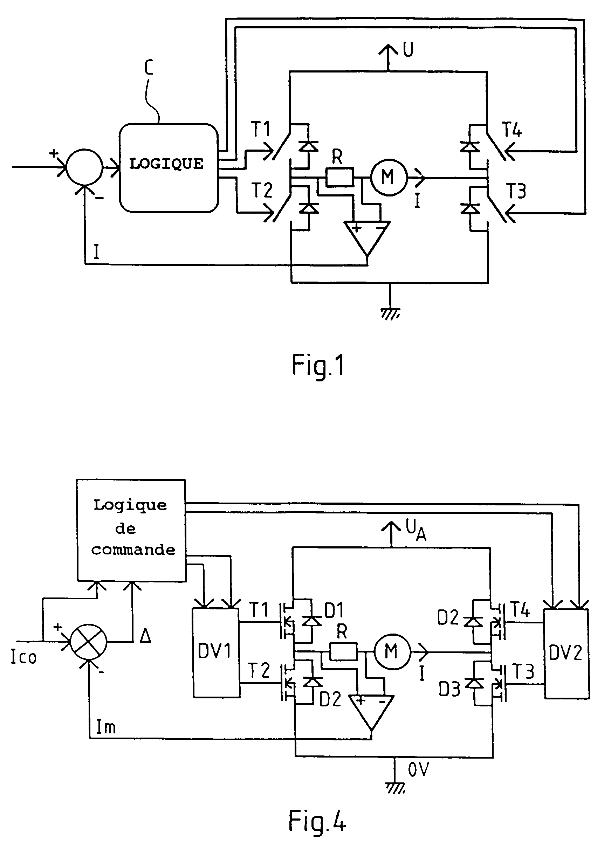

Un exemple de tel amplificateur est représenté sur la figure 1 où T1, T2, T3, T4 sont des interrupteurs statiques (le plus souvent des transistors), M le moteur électrique considéré (une seule phase du moteur est représentée s'il s'agit d'un moteur polyphasé) et I le courant dans le moteur. Sur chaque interrupteur est montée une diode en polarisation inverse. Les bornes supérieure et inférieure du pont en H sont connectées à des potentiels, respectivement, maximum et minimum.

Pour piloter l'appareil électrique M monté au centre du pont, un bloc logique de commande noté C détermine, en fonction du courant mesuré et de la valeur instantanée du courant de consigne (ou courant de commande), la position à donner à chacun des quatre interrupteurs et les durées pendant lesquelles ces positions sont conservées.

Il existe deux manières classiques de pilotage de tels ponts :

- soit un pilotage dit "en diagonal" où les interrupteurs marchent par paires diagonales avec comme logique $T1 = T3 = \underline{T2} = \underline{T4}$ (on note $\underline{Ti}$ la négation logique de Ti, Ti = 1 si l'interrupteur $\underline{i}$ est passant, Ti = 0 si l'interrupteur $\underline{i}$ est ouvert),
- soit un pilotage dit avec "roue libre" sur le haut ou le bas : par exemple, dans le cas de la roue libre sur le bas, il y a deux logiques suivant le sens du courant commandé : $T1 = 0$, $T2 = 1$, $T3 = \underline{T4}$ (courant négatif) ou $T1 = \underline{T2}$, $T3 = 1$, $T4 = 0$ (courant positif).

On appréciera que si $T3 = 1$ (cas du courant négatif) ou si $T2 = 1$ (cas du courant positif) plus aucun potentiel n'est appliqué au moteur, lequel fonctionne en roue libre, d'où le nom choisi pour ce mode de pilotage.

Ces deux types de pilotage sont décrits, notamment, dans le document US-4.581.565, qui commence par décrire le mode de pilotage en diagonale et ses inconvénients, puis enseigne, pour éliminer ces inconvénients, un pont en H particulier et un exemple particulier de mode de pilotage en roue libre.

Le mode de pilotage en diagonale fait intervenir un découpage par cycles de durée constante : pendant une première partie de ce cycle, on ferme les interrupteurs d'une diagonale (l'autre diagonale étant ouverte) puis, pendant une seconde partie de ce cycle, complémentaire de la première partie, on ferme les interrupteurs de l'autre diagonale (en ouvrant la première diagonale). La fraction que représente la première partie par rapport à la durée totale de cycle est choisie en fonction de l'écart instantané entre courant de consigne et courant mesuré, ce courant mesuré étant le courant traversant le moteur. Pour pallier les inconvénients de ce type de pilotage, ce brevet US-4.581.565 enseigne d'une part de mesurer non plus le courant traversant le moteur, mais le courant débité entre les potentiels maximum et minimum ; d'autre part, il enseigne que les cycles soient de durée variable, que l'on applique la différence de tension entre les potentiels maximum et minimum au moteur tant que le courant mesuré est inférieur au courant de consigne et que l'on passe en mode roue libre, pour une durée donnée, dès que le courant mesuré dépasse la consigne.

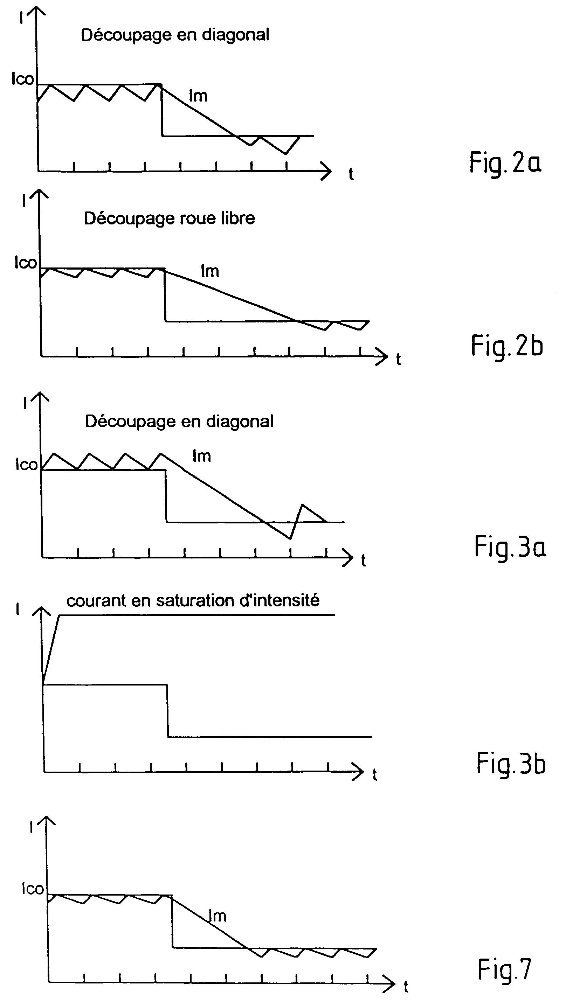

Le découpage en diagonal permet de réaliser une boucle de courant qui fonctionne parfaitement dans toutes les configurations du moteur, en fonctionnement moteur (figure 2a) mais aussi générateur (figure 3a) puisque le potentiel est à tout instant appliqué au moteur, soit dans un sens, soit dans l'autre. Mais l'inconvénient de ce mode de fonctionnement est de créer une forte ondulation de courant (elle est aussi liée à la fréquence de découpage), donc des pertes par effet Joule, et de générer des pertes fer importantes même lorsque le moteur est au repos (consigne de courant nulle).

Par contre, le découpage avec roue libre sur le haut ou le bas du pont permet de réaliser une boucle de courant qui limite les ondulations de courant et les pertes fer (aucune tension n'est appliquée au moteur lorsqu'il fonctionne en roue libre) ce qui conduit à une variation plus lente du courant (figure 2b), mais le courant n'est pas en pratique contrôlé durant les phases où le moteur fonctionne en générateur, de sorte qu'il y a des cas où le moteur s'emballe jusqu'à un régime de saturation d'intensité (voir figure 3b) ; une solution pour éviter cette saturation (voir brevet US-4.581.565 précité) consiste à ouvrir tous les transistors du pont pendant un temps déterminé, mais il n'y a plus alors de contrôle du courant : il y a donc une phase transitoire pendant laquelle la boucle de courant n'est plus fonctionnelle ce qui pose des problèmes si cette boucle est intégrée dans un système plus général. En outre, on peut noter à la figure 2b que la contrepartie des faibles décroissances du courant en régime de palier (qui réduisent l'amplitude des ondulations par rapport à la figure 2a) est une décroissance plus lente qu'à la figure 2a lorsque la consigne baisse brusquement.

L'invention a pour objet de pallier les inconvénients précités à propos des deux types de modes de pilotage et vise un procédé de pilotage permettant à la fois un faible niveau d'ondulation en cas de palier de courant de consigne, mais aussi une variation rapide du courant instantané en cas de variation brusque (notamment baisse) de ce courant de consigne, sans risque d'emballement incontrôlé de l'appareil électrique en régime de surintensité de courant, et sans risquer d'usure prématurée de cet appareil électrique.

L'invention propose à cet effet un procédé de pilotage d'un appareil électrique réversible selon lequel on monte cet appareil électrique à de première et seconde bornes centrales d'un pont en H comportant un premier côté formé d'un premier interrupteur supérieur T1 et d'un premier interrupteur inférieur T2 montés en série entre une ligne de potentiel maximal et une ligne de potentiel minimal, un second côté formé d'un second interrupteur supérieur T4 et d'un second interrupteur inférieur T3, montés en série entre ces lignes de potentiel, une diode en polarisation inverse montée en parallèle sur chaque interrupteur, la première borne centrale étant connectée entre les premiers interrupteurs, et la seconde borne centrale étant connectée entre les seconds interrupteurs, procédé selon lequel, de façon cyclique, avec une fréquence de découpage donnée constante, on mesure le courant Im circulant dans l'appareil électrique depuis le premier côté vers le second côté, on détermine la différence $\Delta$ entre un courant de consigne instantané et ce courant de mesure, puis, en fonction de cette différence $\Delta$, on partage, selon un rapport cyclique R, chaque période de découpage $T_c$ en une première partie et en une seconde partie complémentaire, R désignant le rapport entre la durée de cette première partie et la durée totale de cycle, et on détermine pour chaque partie une position de consigne pour chacun des interrupteurs, puis on place ces derniers dans ces positions de consigne, ce procédé étant caractérisé en ce que :

- on choisit une loi de corrélation F entre le rapport que l'on veut avoir pour chaque cycle entre la tension moyenne Um appliquée à l'appareil au cours du cycle et la tension $U_A$ existant entre les lignes de potentiel maximal et minimal et l'écart $\Delta$, telle que $Um/U_A = F(\Delta)$,
- on sélectionne l'un des courant mesuré et de consigne comme courant de référence I,
- on calcule R et on détermine les positions des interrupteurs en fonction de la valeur instantanée de $\Delta$ et du signe instantané de I selon les trois cas suivants, $\overline{Ti}$ étant la négation logique de Ti, Ti = 1 si l'interrupteur i est passant, Ti = 0 si l'interrupteur i est ouvert :

&ast;  <u>si I > 0 et $\Delta$ > 0</u> :

$R = F(\Delta)$ si $0 \leq F(\Delta) \leq 1$
$R = 0$     si     $F(\Delta) < 0$
$R = 1$     si     $F(\Delta) > 1$
T1 = T3 = 1 ; T2 = T4 = 0 pendant la première partie
T1 = T4 = $\overline{T2}$ = $\overline{T3}$      pendant la deuxième partie

&ast;  <u>si I < 0 et $\Delta$ < 0</u>

$R = 1 + F(\Delta)$ si $0 \leq 1 + F(\Delta) \leq 1$
$R = 0$      si $1 + F(\Delta) < 0$
$R = 1$      si $1 + F(\Delta) > 1$
T1 = T4 = $\overline{T2}$ = $\overline{T3}$      pendant la première partie
T1 = T3 = 0 ; T2 = T4 = 1 pendant la seconde partie

&ast;  <u>si I et $\Delta$ sont de signes différents</u>

$R = (1 + F(\Delta))/2$ si $0 \leq (1 + F(\Delta))/2 \leq 1$
$R = 0$      si     $(1 + F(\Delta))/2 < 0$
$R = 1$      si     $(1 + F(\Delta))/2 > 1$
T1 = T3 = 1 ; T2 = T4 = 0 pendant la première partie
T1 = T3 = 0 ; T2 = T4 = 1 pendant la deuxième partie.

On appréciera que l'invention combine de façon astucieuse certains enseignements des deux modes de pilotage précités, en reconnaissant les relations qui doivent exister entre R et F selon qu'à un instant donné on utilise un pilotage diagonal ou un pilotage de type roue libre : tant que le courant de référence est positif, et l'écart entre le courant commandé et le courant mesuré est positif, ou le courant de référence est négatif, et l'écart entre le courant commandé et le courant mesuré est négatif, on adopte un pilotage de type roue libre et R varie proportionnellement à F, tandis que dès que le courant de référence et l'écart entre le courant commandé et le courant mesuré sont de signes différents, on adopte un pilotage de type diagonal et R varie proportionnellement à F/2.

Selon des dispositions préférées de l'invention éventuellement combinées :

- on choisit le courant commandé comme courant de référence,
- on choisit pour F une forme linéaire :

$$Um/U_A = k \ast \Delta$$

où k est un réel positif,
- dans le cas

&ast;  I > 0 et $\Delta$ > 0 on choisit T1 = T4 = 0 pendant la deuxième partie,
&ast;  I < 0 et $\Delta$ < 0 on choisit T1 = T4 = 0 pendant la première partie ; cela définit un mode "roue libre par le bas",

- en variante, dans ces mêmes cas, on peut choisir T1 = T4 = 1, ce qui définit un mode "roue libre sur le haut".

Des objets, caractéristiques et avantages de l'invention ressortent de la description qui suit, donnée à titre d'exemple non limitatif, en regard des dessins annexés sur lesquels :

- la figure 1 est un schéma d'un moteur monté dans un amplificateur à découpage en pont en H de type connu,

- les figures 2a et 2b sont des graphiques représentant les variations au cours du temps du courant I traversant le moteur de la figure 1, selon un mode de pilotage en diagonal et selon un mode de pilotage en roue libre, respectivement, lorsque ce moteur fonctionne en moteur,
- les figures 3a et 3b sont des graphiques similaires à ceux des figures 2a et 2b, mais dans des cas où le moteur fonctionne en générateur,
- la figure 4 est un schéma d'un amplificateur à découpage en pont en H adapté à la mise en oeuvre d'un procédé conforme à l'invention,
- la figure 5 est un tableau donnant les configurations des interrupteurs de la figure 4, en fonction des valeurs logiques de paramètres A, B et C représentatifs de la partie du cycle de découpage que l'on considère, et du signe de courant de consigne et de la position du courant mesuré par rapport au courant de consigne,
- la figure 6 est un tableau donnant les relations entre R et F pour les diverses valeurs logiques de B et C,
- la figure 7 est un schéma, similaire aux figures 2a et 2b, montrant schématiquement le comportement de l'amplificateur de la figure 4, lors de la mise en oeuvre du procédé de l'invention,
- la figure 8 est un exemple de variation réelle de Im au cours du temps, en fonction d'un courant de consigne suivant une loi en escalier, et
- la figure 9 est un graphique montrant l'amplitude des tensions appliquées au moteur lors des diverses phases de la courbe de la figure 8.

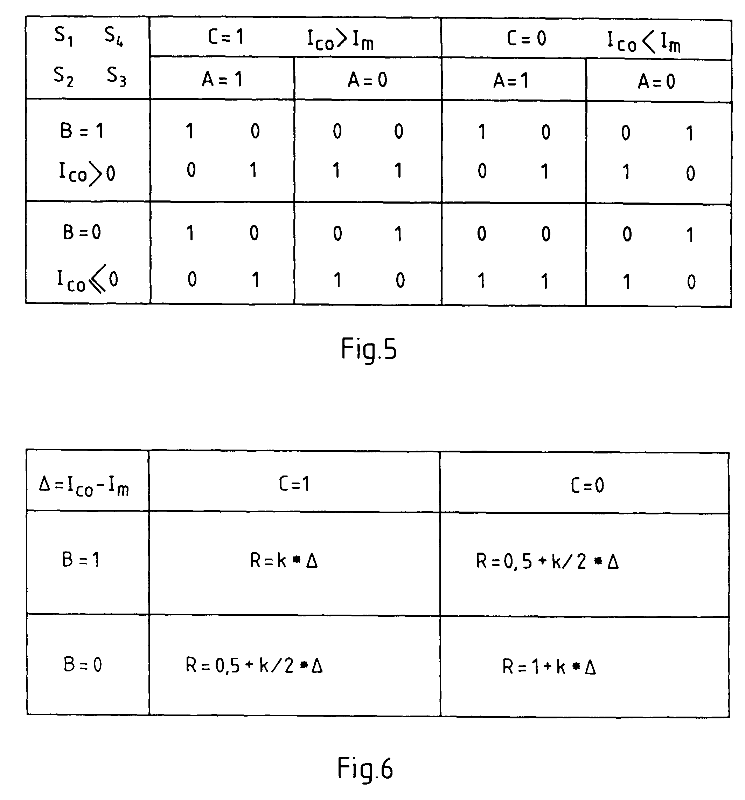

La figure 4 est un schéma d'un amplificateur à découpage en pont en H, adapté à la mise en oeuvre du procédé de l'invention. Ce circuit comporte :

- un appareil électrique M, ici un moteur du type à courant continu à balais,
- un pont en H au centre duquel est monté ce moteur, réalisé avec quatre interrupteurs de puissance T1, T2, T3, T4 de tout type connu (par exemple des transistors MOSFET de puissance pilotés par des drivers DV1 et DV2 de type IR 2110) et de quatre diodes de recirculation de courant D1, D2, D3, D4 de tout type connu, montées en polarisation inverse sur ces transistors ; ces diodes peuvent en pratique être intégrées aux interrupteurs,
- un système quelconque fournissant une information Im sur le courant circulant dans le moteur (ici par exemple une résistance shunt R de mesure en série avec le moteur et associé à un amplificateur différentiel de mesure),
- une logique de commande qui pilote les interrupteurs de puissance et qui reçoit comme information le courant commandé Ico et la différence entre $\Delta$ le courant commandé Ico et le courant mesuré, Im,

- un générateur (non représenté) adapté à appliquer aux bornes du pont une tension d'alimentation $U_A$.

Le système logique de commande assure plusieurs fonctions :

- il saisit et met en forme, à une fréquence de cycle constante prédéterminée déterminant des cycles de durée $T_C$, les signaux de commande du système, c'est-à-dire Ico et le signal d'écartométrie $\Delta = (Ico - Im)$. On entend ici, de façon classique en soi, par mise en forme des signaux de commande, tout traitement sur les informations d'entrées ou sur une combinaison des deux (amplification, offset, comparaison, filtrage, intégration, etc...),
- il réalise une modulation, par largeur d'impulsion, de l'écartométrie $\Delta$ au moyen de tout système connu. Plus précisément, il détermine le rapport R, appelé rapport cyclique de la modulation, définissant le partage de chaque cycle $T_C$ en de première et seconde parties ; selon l'invention, ce paramètre R est une fonction de Ico (ou de Im) et de $\Delta$. Dans le cas d'une boucle de courant asservi de manière linéaire, cette fonction est linéaire "par mode de découpage",
- il détermine le mode de pilotage à appliquer en fonction des informations d'entrées. Le critère de basculement est simple : si le courant mesuré est inférieur ou égal au courant commandé pour un courant commandé positif, ou si le courant mesuré est supérieur au courant commandé pour un courant commandé négatif, alors le pont en H a une logique de découpage de type roue libre (la roue libre peut s'effectuer indifféremment sur le haut ou le bas du pont en H en fonction de contraintes supplémentaires (éventuellement variables) qui peuvent exister lors d'une réalisation pratique) ; si le courant mesuré est supérieur au courant commandé pour un courant commandé positif ou si le courant mesuré est inférieur au courant commandé pour un courant commandé négatif, alors le pont en H a une logique de découpage de type diagonal.

La figure 5 décrit un exemple de logique dans le cas où le moteur à courant continu M est asservi linéairement en courant, le mode en roue libre étant choisi sur le bas. Cette logique est décrite à l'aide des variables suivants :

- A est la sortie logique du modulateur par largeur d'impulsion (A vaut 1 pendant la première partie du cycle et A vaut 0 pendant le reste de ce cycle). Soit $T_C$ la période du modulateur par largeur d'impulsion, et soit $T_A$ le temps au cours du cycle où A vaut 1 ; le rapport $R = T_A/T_C$ définit le rapport cyclique du modulateur : ( $R \in [0,1]$ ) c'est-à-dire la fraction du cycle que représente sa première partie,
- B est le signe de Ico :

B = 1 si Ico > 0, B = 0 si Ico = 0 ou < 0.

- C est le signe de $\Delta$ = (Ico - Im) :
  C = 1 si ($\Delta$ > 0, C = 0 si $\Delta$ = 0 ou < 0.
- $S_1$, $S_2$, $S_3$, $S_4$ sont les états logiques des interrupteurs T1, T2, T3, T4 : si $S_i$ = 1 alors Ti est dans un état passant.

On peut définir la logique de commande par les équations suivantes :

$$S_1 = A * (B + C)$$

$$S_2 = \underline{A} + \underline{(B + C)}$$

$$S_3 = A + B * C$$

$$S_4 = \underline{A} * \underline{B} * C$$

si

$\underline{A}$ est la négation logique de A
\* est la relation logique ET
\+ est la relation logique OU

Pour ce qui est du rapport cyclique R on peut le définir de la manière suivante, à partir d'un paramètre k fixé à l'avance (voir figure 6).

si B = C = 1

R = k\*$\Delta$ si k\*$\Delta$ compris entre 0 et 1 (bornes comprises)
R = 1 si k\*$\Delta$ > 1
le cas k\*$\Delta$ < 0 n'est pas possible ici puisque le gain k est un réel positif et $\Delta$ > 0.

si B = C = 0

R = 1 + k\*$\Delta$ si 1 + k\*$\Delta$ compris entre 0 et 1 (bornes comprises)
R = 0       si 1 + k\*$\Delta$ inférieur à 0
le cas (1 + k\*$\Delta$) > 1 n'est pas possible ici puisque le gain k est un réel positif et $\Delta$ < 0.

si B = $\underline{C}$

R = (1 + k\*$\Delta$)/2 si (1 + k\*$\Delta$)/2 compris entre 0 et 1 (bornes comprises)
R = 0       si (1 + k\*$\Delta$)/2 inférieur à 0
R = 1       si (1 + k\*$\Delta$)/2 supérieur à 1

Soit Um la valeur moyenne au cours d'un cycle de la tension appliquée aux bornes du moteur M.
Dans le premier cas précité (pilotage en roue libre) :
Um = R\*$U_A$ d'où en remplaçant R par sa valeur :
Um = k\*$U_A$\*$\Delta$ (avec Um $\in$ [- $U_A$, $U_A$]

Dans le second cas (pilotage en roue libre :
Um = (R-1)\*$U_A$ d'où en remplaçant R par sa valeur
Um = k\*$U_A$\*$\Delta$

Dans le troisième cas (pilotage en diagonal) :
Um = (2\*R-1 )\*$U_A$ d'où, en remplaçant R par sa valeur
Um = k\*$U_A$ $\Delta$

On notera que la combinaison des données des figures 5 et 6 conduit à une même loi de corrélation, au cours du temps, entre Um et $\Delta$. Cette combinaison garantit donc la continuité de la valeur moyenne de la tension aux bornes du moteur, indépendamment du mode de pilotage instantané, ce qui garantit un bon fonctionnement de l'asservissement ainsi que du moteur.
k est un coefficient sans dimension qui détermine dans l'exemple ci-dessus le gain du contrôle proportionnel réalisé :
k $\varepsilon$ ]0, + $\infty$[. k doit être choisi en fonction des performances souhaitées et de manière à assurer la stabilité de la boucle.
Le contrôle proportionnel réalisé ci-dessus n'est donné qu'à titre d'exemple, toute autre loi de contrôle adaptée au problème d'asservissement posé peuvant être choisie et réalisée.
C'est ainsi par exemple que l'on peut déterminer R à partir de n'importe quel choix sur la loi de corrélation F entre Um/$U_A$ et $\Delta$ tel que Um/$U_A$ = F($\Delta$).
La conservation de la valeur moyenne permet en effet de déterminer R pour chacun des cas précités :

B = C = 1 : R = F($\Delta$) (ou R = 0 ou 1 si F($\Delta$) est en dehors de l'intervalle)
B = C = 0 : R = 1 + F($\Delta$) (ou R = 0 ou 1 si 1 + F($\Delta$) est en dehors de l'intervalle)
B = $\underline{C}$ : R = (1 + F($\Delta$))/2 (ou R = 0 ou 1 si 1 + F($\Delta$)) /2 est en dehors de l'intervalle).

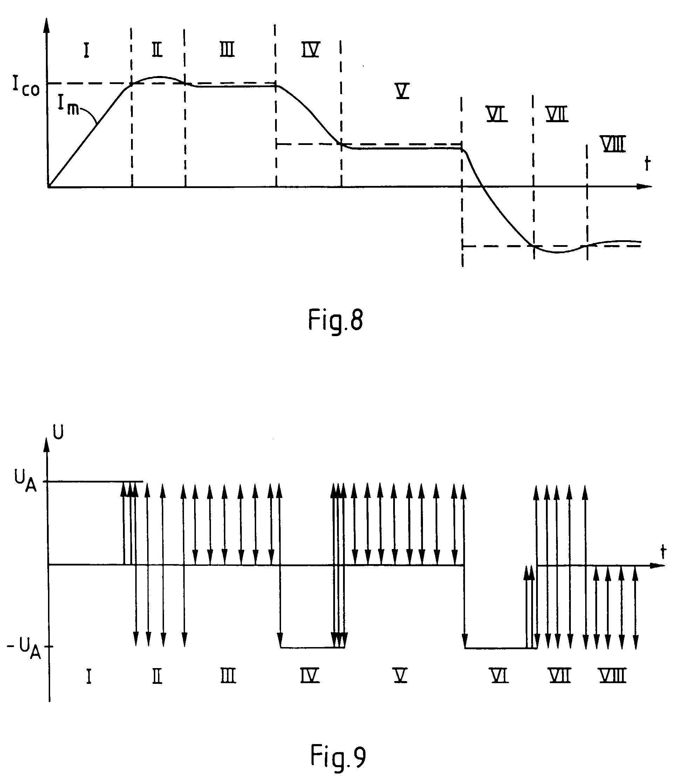

La figure 8 représente une courbe imposée à Ico et la courbe résultante pour Im, tandis que la figure 9 montre l'amplitude de variation possible pour la tension appliquée au moteur.
La phase de croissance I correspond au mode roue libre (B = C = 1) avec une tension soit égale à $U_A$ soit à 0 (en fait la tension reste en $U_A$ si R reste égal à 1).
Au terme de cette phase de croissance, Im peut tendre à Ico en lui restant inférieur, auquel cas le mode roue libre est maintenu. Toutefois pour peu que le gain soit fort, Im vient à franchir Ico auquel cas (phase II) on passe en mode diagonal (B = 1 ; C = 0) jusqu'à ce que Im repasse en dessous de Ico : on repasse alors en mode roue libre (B = C = 1 ; phase III).
Lorsque Ico baisse brusquement (phase IV) on repasse en mode diagonal (B = 1 ; C = 0) jusqu'au moment où Im vient se stabiliser au dessous de Ico (B = C = 1), phase V pendant laquelle on revient en mode roue libre.

Lorsque Ico baisse brusquement jusqu'à devenir négatif (phase IV où B = C = 0) on reste en régime roue libre jusqu'à ce que Im passe en dessous de Ico (phase VII) auquel cas on repasse en mode diagonal puis à nouveau en roue libre (phase VIII).

Sur la figure 9 apparaissent des flèches verticales pour chacune des phases précitées où il y a une stabilisation en palier avec R compris entre 0 et 1 (bornes exclues) tandis que des traits horizontaux apparaissent dans les phases où R reste à une valeur extrême 0 ou 1. Cette courbe comporte des changements successifs et ce n'est que grâce aux indications précitées pour définir R en fonction de B, C et F($\Delta$) que la valeur Um peut varier continûment.

Il va de soi que la description qui précède n'a été proposée qu'à titre d'exemple non limitatif et que de nombreuses variantes peuvent être proposées par l'homme de l'art sans sortir du cadre de l'invention.

C'est ainsi en particulier que l'esprit de l'invention ne change pas en substance si, dans la figure 5, on désigne par B non plus le signe de Ico mais celui de Im. Sur la figure 8, cette modification se traduirait seulement par la décomposition de la phase VI en une phase de pilotage diagonal suivie d'une phase de roue libre, ce qui serait sensiblement sans effet sur les courbes des figures 8 et 9, tant que R resterait à l'une de ses bornes (k élevé) ; par contre le choix, au début de la phase VI, du mode diagonal pourrait avoir comme avantage, dans le cas d'une faible valeur absolue de k*$\Delta$, c'est-à-dire d'une valeur de R intermédiaire entre 0 et 1, de faire baisser Im plus vite vers 0. Il est à noter par ailleurs que si l'on veut rester en roue libre pendant toute la phase VI en prenant Im comme courant de référence, il faut dissocier en deux les cas B = $\underline{C}$ de la figure 5, selon le signe de Ico, ce qui reviendrait à prendre Ico comme courant de référence.

Par ailleurs, dans le cas où l'on souhaiterait, pour de quelconques raisons, que le mode roue libre soit plutôt sur le haut, rien de ce qui précède ne serait sensiblement changé, les équations concernant les interrupteurs devenant :

$$S_1 = A + (B * C)$$

$$S_2 = \underline{A} * (\underline{B * C})$$

$$S_3 = A * (B + C)$$

$$S_4 = \underline{A} + (\underline{B + C})$$

Enfin, ce qui précède se généralise aisément au cas d'un appareil électrique polyphasé, auquel cas il suffit de répéter ce qui précède pour chacune des phases.

## Revendications

1. Procédé de pilotage d'un appareil électrique réversible (M) selon lequel on monte cet appareil électrique à de première et seconde bornes centrales d'un pont en H comportant un premier côté formé d'un premier interrupteur supérieur T1 et d'un premier interrupteur inférieur T2 montés en série entre une ligne de potentiel maximal et une ligne de potentiel minimal, un second côté formé d'un second interrupteur supérieur T4 et d'un second interrupteur inférieur T3, montés en série entre ces lignes de potentiel, une diode (D1, D2, D3, D4) en polarisation inverse montée en parallèle sur chaque interrupteur, la première borne centrale étant connectée entre les premiers interrupteurs, et la seconde borne centrale étant connectée entre les seconds interrupteurs, procédé selon lequel, de façon cyclique, avec une fréquence de découpage donnée constante, on mesure le courant Im circulant dans l'appareil électrique depuis le premier côté vers le second côté, on détermine la différence $\Delta$ entre un courant de consigne instantané et ce courant de mesure, puis, en fonction de cette différence $\Delta$, on partage, selon un rapport cyclique R, chaque période de découpage $T_C$ en une première partie et en une seconde partie complémentaire, R désignant le rapport entre la durée de cette première partie et la durée totale de cycle, et on détermine pour chaque partie une position de consigne pour chacun des interrupteurs, puis on place ces derniers dans ces positions de consigne, ce procédé étant caractérisé en ce que :

   - on choisit une loi de corrélation F entre le rapport que l'on veut avoir pour chaque cycle entre la tension moyenne Um appliquée à l'appareil au cours du cycle et la tension $U_A$ existant entre les lignes de potentiel maximal et minimal et l'écart $\Delta$, telle que Um/$U_A$ = F($\Delta$),
   - on sélectionne l'un des courant mesuré et de consigne comme courant de référence I,
   - on calcule R et on détermine les positions des interrupteurs en fonction de la valeur instantanée de $\Delta$ et du signe instantané de I selon les trois cas suivants, $\underline{Ti}$ étant la negation logique de Ti, Ti = 1 si l'interrupteur $\underline{i}$ est passant, Ti = 0 si l'interrupteur $\underline{i}$ est ouvert :

      * $\underline{si\ I > 0\ et\ \Delta > 0}$ :

         R = F($\Delta$) si 0 ≤ F($\Delta$) ≤ 1
         R = 0      si      F($\Delta$) < 0
         R = 1      si      F($\Delta$) > 1
         T1 = T3 = 1 ; T2 = T4 = 0 pendant la première partie

T1 = T4 = T2 = T3  pendant la deuxième partie

* si I < 0 et Δ < 0

R = 1 + F(Δ) si 0 ≤ 1 + F(Δ) ≤ 1
R = 0    si 1 + F(Δ) < 0
R = 1    si 1 + F(Δ) > 1
T1 = T4 = T2 = T3  pendant la première partie
T1 = T3 = 0 ; T2 = T4 = 1 pendant la seconde partie

* si I et Δ sont de signes différents

R = (1 + F(Δ))/2 si 0 ≤ (1 + F(Δ))/2 ≤ 1
R = 0    si    (1 + F(Δ))/2 < 0
R = 1    si    (1 + F(Δ))/2 > 1
T1 = T3 = 1 ; T2 = T4 = 0 pendant la première partie
T1 = T3 = 0 ; T2 = T4 = 1 pendant la deuxième partie.

2. Procédé selon la revendication 1, caractérisé en ce qu'on choisit le courant commandé comme courant de référence.

3. Procédé selon la revendication 1 ou la revendication 2, caractérisé en ce qu'on choisit pour F une forme linéaire :

$$Um/U_A = k*\Delta$$

où k est un réel positif.

4. Procédé selon l'une quelconque des revendications 1 à 3, caractérisé en ce que dans le cas

* I > 0 et Δ > 0 on choisit T1 = T4 = 0 pendant la deuxième partie,
* I < 0 et Δ < 0 on choisit T1 = T4 = 0 pendant la première partie.

5. Procédé selon l'une quelconque des revendications 1 à 3, caractérisé en ce que dans le cas

* I > 0 et Δ > 0 on choisit T1 = T4 = 1 pendant la deuxième partie,
* I < 0 et Δ < 0 on choisit T1 = T4 = 1 pendant la première partie.

**Patentansprüche**

1. Steuerungsverfahren eines umkehrbaren elektrischen Apparates (M), gemäß dem dieser elektrische Apparat an erste und zweite zentrale Anschlußklemmen einer H-förmigen Brücke angebracht wird, die eine erste Seite, welche aus einem ersten oberen Schalter T1 und einem ersten unteren Schalter T2 gebildet ist, welche zwischen einer Leitung auf maximalem Potential und einer Leitung auf minimalem Potential in Serie geschaltet sind, eine zweite Seite, die aus einem zweiten oberen Schalter T4 und einem zweiten unteren Schalter T3 gebildet ist, welche zwischen diesen Potentialleitungen in Serie geschaltet sind, aufweist, wobei eine Diode (D1, D2, D3, D4) mit umgekehrter Polarisation zu jedem Schalter parallel geschaltet ist, wobei die erste zentrale Anschlußklemme zwischen den ersten Schaltern und die zweite zentrale Anschlußklemme zwischen den zweiten Schaltern angebunden ist, wobei gemäß dem Verfahren zyklisch mit einer vorgegebenen, konstanten Pendelfrequenz der Strom Im gemessen wird, der im elektrischen Apparat von der ersten Seite zur zweiten Seite läuft, die Differenz Δ zwischen einem momentanen Sollstrom und diesem gemessenen Strom ermittelt wird und anschließend als Funktion dieser Differenz Δ gemäß einem zyklischen Verhältnis R jede Pendelperiode $T_C$ in einen ersten Teil und in einen zweiten komplementären Teil geteilt wird, wobei R das Verhältnis zwischen der Dauer dieses ersten Teils und der Gesamtdauer des Zyklus ist, und wobei für jeden Teil eine Sollposition für jeden der Schalter bestimmt wird und anschließend diese letzteren in diese Sollpositionen gebracht werden, wobei das Verfahren dadurch gekennzeichnet ist, daß:

- ein Korrelationsgesetz F zwischen dem Verhältnis, das man für jeden Zyklus zwischen der mittleren Spannung Um, die im Verlauf des Zyklus an den Apparat angelegt wird, und der Spannung $U_A$, die zwischen diesen Leitungen maximalen und minimalen Potentials besteht, haben möchte, und dem Abstand Δ ausgewählt wird, so daß $Um/U_A = F(\Delta)$,
- entweder der gemessene Strom oder der Sollstrom als Bezugsstrom I ausgewählt wird,
- R errechnet wird und die Positionen der Schalter als Funktion des momentanen Werts von Δ und des momentanen Vorzeichens von I gemäß den drei folgenden Fällen ausgewählt werden, wobei Ti die logische Verneinung von Ti ist, Ti = 1, wenn der Schalter i geschlossen ist, Ti = 0, wenn der Schalter i offen ist:

* wenn I > 0 und Δ > 0 :

R = F(Δ)    wenn 0 ≤ F(Δ) ≤ 1
R = 0    wenn    F(Δ) < 0
R = 1    wenn    F(Δ) > 1
T1 = T3 = 1 ; T2 = T4 = 0    während des ersten Teils
T1 = T4 = <u>T2</u> = <u>T3</u>     während des zweiten Teils

\*    <u>wenn I < 0 und $\Delta$ < 0</u> :

$R = 1 + F(\Delta)$     wenn $0 \leq 1 + F(\Delta) \leq 1$
$R = 0$     wenn $1 + F(\Delta) < 0$
$R = 1$     wenn $1 + F(\Delta) > 1$
T1 = T4 = <u>T2</u> = <u>T3</u>     während des ersten Teils
T1 = T3 = 0; T2 = T4 = 1     während des zweiten Teils

\*    <u>wenn I und $\Delta$ unterschiedliche Vorzeichen haben:</u>

$R = (1 + F(\Delta))/2$ wenn $0 \leq (1 + F(\Delta))/2 \leq 1$
$R = 0$     wenn $(1 + F(\Delta))/2 < 0$
$R = 1$     wenn $(1 + F(\Delta))/2 > 1$
T1 = T3 = 1; T2 = T4 = 0     während des ersten Teils
T1 = T3 = 0; T2 = T4 = 1     während des zweiten Teils

2. Verfahren nach Anspruch 1, dadurch gekennzeichnet, daß der gesteuerte Strom als Bezugsstrom gewählt wird.

3. Verfahren nach Anspruch 1 oder 2, dadurch gekennzeichnet, daß für F eine lineare Form gewählt wird:

$$Um/U_A = k^*\Delta$$

wobei k eine positive reelle Zahl ist.

4. Verfahren nach einem der Ansprüche 1 bis 3, dadurch gekennzeichnet, daß im Fall

\*    I > 0 und $\Delta$ > 0 T1 = T4 = 0 während des zweiten Teils ausgewählt wird,
\*    I < 0 und $\Delta$ < 0 T1 = T4 = 0 während des ersten Teils ausgewählt wird.

5. Verfahren nach einem der Ansprüche 1 bis 3, dadurch gekennzeichnet, daß im Fall

\*    I > 0 und $\Delta$ > 0 T1 = T4 = 1 während des zweiten Teils ausgewählt wird,
\*    I < 0 und $\Delta$ < 0 T1 = T4 = 1 während des ersten Teils ausgewählt wird.

**Claims**

1. Method of controlling a reversible electric device (M) in which said electric device is connected to first and second centre terminals of an H bridge having a first side formed by a first top switch T1 and a first bottom switch T2 connected in series between a maximal potential line and a minimal potential line, a second side formed by a second top switch T4 and a second bottom switch T3 connected in series between said potential lines, a reverse-biased diode (D1, D2, D3, D4) shunting each switch, said first centre terminal being connected between said first switches and said second centre terminal being connected between said switches, in which method the current Im flowing in the electric device from the first side to the second side is measured cyclically with a given constant switching frequency, the difference $\Delta$ between an instantaneous set point current and the measured current is determined, and then, depending on said difference $\Delta$, each switching period $T_C$ is divided with a cyclic ratio R into a first part and a complementary second part, R denoting the ratio between the duration of said first part and the total cycle duration, and for each part a set point setting is determined for each switch after which said switches are set to said set point settings, said method being characterized in that:

- a correlation law F is chosen between the ratio required for each cycle between the mean voltage Um applied to the device during the cycle and the voltage $U_A$ between the maximal and minimal potential lines and the difference $\Delta$ such that $Um/U_A = F(\Delta)$,
- either the measured current or the set point current is selected as a reference current I,
- R is computed and the settings of said switches are determined according to the instantaneous value of $\Delta$ and the instantaneous sign of I in the three following cases, $\underline{T}i$ being the logical complement of Ti, Ti = 1 if switch $\underline{i}$ is on, Ti = 0 if switch $\underline{i}$ is off:

\*    <u>if I > 0 and $\Delta$ > 0</u>:

$R = F(\Delta)$ if $0 \leq F(\Delta) \leq 1$
$R = 0$     if     $F(\Delta) < 0$
$R = 1$     if     $F(\Delta) > 1$
T1 = T3 = 1 ; T2 = T4 = 0 during the first part,
T1 = T4 = <u>T2</u> = <u>T3</u>     during the second part,

\*    <u>if I < 0 and $\Delta$ < 0</u>

$R = 1 + F(\Delta)$ if $0 \leq 1 + F(\Delta) \leq 1$
$R = 0$     if $1 + F(\Delta) < 0$

$R = 1$      if $1 + F(\Delta) > 1$
$T1 = T4 = \underline{T2} = \underline{T3}$      during the first part,
$T1 = T3 = 0$ ; $T2 = T4 = 1$ during the second part,

*    <u>if I and $\Delta$ are of opposite sign</u>

$R = (1 + F(\Delta))/2$ if $0 \leq (1 + F(\Delta))/2 \leq 1$
$R = 0$     if     $(1 + F(\Delta))/2 < 0$
$R = 1$     if     $(1 + F(\Delta))/2 > 1$
$T1 = T3 = 1$ ; $T2 = T4 = 0$ during the first part,
$T1 = T3 = 0$ ; $T2 = T4 = 1$ during the second part.

2. Method according to claim 1 wherein the controlled current is chosen as the reference current.

3. Method according to claim 1 or claim 2 wherein a linear form:

$$Um/U_A = k*\Delta$$

is chosen for F where k is a positive real number.

4. Method according to any one of claims 1 to 3 wherein if

*    $I > 0$ and $\Delta > 0$, $T1 = T4 = 0$ during the second part,
*    $I < 0$ and $\Delta < 0$, $T1 = T4 = 0$ during the first part.

5. Method according to any one of claims 1 to 3 wherein if

*    $I > 0$ and $\Delta > 0$, $T1 = T4 = 0$ during the second part,
*    $I < 0$ and $\Delta < 0$, $T1 = T4 = 0$ during the first part.

Fig.1

Fig.4

Découpage en diagonal

Ico

Im

t

Fig. 2a

Découpage roue libre

Ico

Im

t

Fig. 2b

Découpage en diagonal

Ico

Im

t

Fig. 3a

courant en saturation d'intensité

I

t

Fig. 3b

Ico

Im

t

Fig. 7

| $S_1 \quad S_4$ $S_2 \quad S_3$ | $C=1 \quad I_{co} > I_m$ | | $C=0 \quad I_{co} < I_m$ | |
|---|---|---|---|---|
| | $A=1$ | $A=0$ | $A=1$ | $A=0$ |
| $B=1$ $I_{co} > 0$ | 1 0 <br> 0 1 | 0 0 <br> 1 1 | 1 0 <br> 0 1 | 0 1 <br> 1 0 |
| $B=0$ $I_{co} < 0$ | 1 0 <br> 0 1 | 0 1 <br> 1 0 | 0 0 <br> 1 1 | 0 1 <br> 1 0 |

Fig.5

| $\Delta = I_{co} - I_m$ | $C=1$ | $C=0$ |
|---|---|---|
| $B=1$ | $R = k * \Delta$ | $R = 0,5 + k/2 * \Delta$ |
| $B=0$ | $R = 0,5 + k/2 * \Delta$ | $R = 1 + k * \Delta$ |

Fig.6

Fig.8

Fig.9